# EUROPÄISCHE PATENTSCHRIFT

(11) **EP 0 552 640 B1**
(45) Veröffentlichungstag und Bekanntmachung des Hinweises auf die Patenterteilung: **01.05.1996**
(21) Anmeldenummer: 93100308.1
(22) Anmeldetag: 12.01.1993
(51) Int. Cl.: B29C 45/27, F16B 19/02

(54) **Klemmeinrichtung für Heisskanalverteiler**
Clamping device for hot runner manifold
Dispositif de serrage pour distributeur à canaux chauds

(30) Priorität: 20.01.1992 DE 4201341
(43) Veröffentlichungstag der Anmeldung: 28.07.1993
(73) Patentinhaber: INCOE CORPORATION, Troy, Michigan 48099 (US)
(72) Erfinder: Gauler, Kurt, W-6106 Erzhausen (DE)
(74) Vertreter: Boecker, Joachim, Dr.-Ing.

(56) Entgegenhaltungen:
- EP-A- 0 480 213
- DE-U- 8 709 724
- EUROPEAN PLASTICS NEWS Bd. 12, Nr. 6, Juni 1985, LONDON GB pages 49,50.52 EVANS 'Developments in runnerless moulding'

## Beschreibung

Die Erfindung betrifft eine Klemmeinrichtung für Heißkanalverteiler mit einer Schraubenverbindung zwischen einem Heißkanalverteiler und einer Düsenplatte des Spritzgießwerkzeugs, in die mindestens eine an den Heißkanalverteiler angeschlossene Angußdüse eingesetzt ist, mit beiderseits des Heißkanalverteilers angeordneten, in die Düsenplatte eingeschraubten Klemmschrauben. Eine derartige Klemmeinrichtung ist aus EP-A-0 480 213 bekannt.

Heißkanalverteiler dienen dazu, die durch Erwärmung plastifizierte Kunststoffschmelze zu den einzelnen, in die Düsenplatte des Spritzgießwerkzeugs eingesetzten Angußdüsen zu leiten.

Die Angußdüsen sind in Aufnahmebohrungen der Düsenplatte eingesetzt und liegen mit ihrer äußeren Stirnfläche dichtend an der der Düsenplatte zugekehrten Fläche des Heißkanalverteilers, nachfolgend vereinfachend als "Unterseite" bezeichnet, an.

Bei bekannten Heißkanalverteilern sind üblicherweise an beiden Seiten vorspringende Augen vorgesehen, die die Klemmschrauben aufnehmen. Zur Herstellung der Heißkanalverteiler ist es erforderlich, die Außenkontur einschließlich der nach außen vorstehenden Augen für die Klemmschrauben aus einem entsprechend größeren Materialblock herauszufräsen. Dies bedingt einen erheblichen Arbeits- und Materialaufwand.

Da der Heißkanalverteiler beheizt ist, unterliegt er im Betrieb Wärmedehnungen, während die in das Spritzgießwerkzeug eingesetzten Angußdüsen ihre Lage weitgehend beibehalten. Diese Wärmedehnungen, die je nach Abmessungen des Heißkanalverteilers verhältnismäßig groß sein können und beispielsweise bis zu 3 mm betragen, führen zu Biegungen und Verspannungen der in die seitlichen Augen eingesetzten Klemmschrauben. Außerdem kommt es infolge der Wärmedehnungen zu einer Erhöhung der Flächenpressung zwischen dem Heißkanalverteiler und den Angußdüsen. Diese können sich in die Unterseite des Heißkanalverteilers eindrücken; es kann zu Oberflächenschäden (Fressen) an den einanderliegenden Dichtflächen kommen.

Aufgabe der Erfindung ist es daher, eine Klemmeinrichtung der eingangs genannten Art zu schaffen, die eine weitgehend unbehinderte Wärmedehnung des Heißkanalverteilers ohne schädlichen Einfluß auf die Klemmschrauben und/oder die Angußdüsen erlaubt.

Diese Aufgabe wird erfindungsgemäß dadurch gelöst, daß an den gegenüberliegenden Längskanten des Heißkanalverteilers jeweils zur Oberseite und zur benachbarten Seitenfläche des Heißkanalverteilers offene Aussparungen vorgesehen sind, die von einer zur Ebene der Düsenplatte parallelen Bodenfläche und einer senkrecht dazu verlaufenden Zylinderwandfläche begrenzt werden, und daß jeweils ein Klemmkörper eine Aufnahmebohrung für die Klemmschraube und seitlich davon einen Zylinderansatz aufweist, der in die Aussparung mit begrenzter horizontaler Schwenkbarkeit passend eingesetzt ist.

Diese Klemmkörper sind an den Seiten des Heißkanalverteilers angebracht und können in dessen Längsrichtung eine begrenzte Schwenkbewegung ausführen. Der aus der Seitenfläche des Heißkanalverteilers herausragende Abschnitt des Klemmkörpers bildet ein Auge zur Aufnahme der zugeordneten Klemmschraube.

Wenn der Heißkanalverteiler Wärmedehnungen unterliegt, wird der in der seitlichen Aussparung des Heißkanalverteilers aufgenommene Zylinderansatz des Klemmkörpers verschwenkt; das angeschlossene Auge und die darin aufgenommene Klemmschraube bleiben dabei weitestgehend unbeweglich, so daß einerseits keine Biegekräfte auf die Klemmschraube ausgeübt werden und andererseits keine Reaktionskräfte auf den Heißkanalverteiler wirken, durch die dieser gebogen und/oder verspannt werden könnte. Deshalb kommt es bei einer Wärmedehnung des Heißkanalverteilers auch nicht zu einer Erhöhung der Flächenpressung in einzelnen Bereichen der Dichtflächen zwischen dem Heißkanalverteiler und der Angußdüse.

Die Gefahr einer Beschädigung der Dichtflächen zwischen der Angußdüse und dem Heißkanalverteiler wird wesentlich verringert, weil der Heißkanalverteiler bei einer Wärmedehnung nur geradlinige Bewegungen in Richtung dieser Dichtflächen ausführt.

Die Fertigung des Heißkanalverteilers wird wesentlich vereinfacht und die Kosten verringert, weil der Heißkanalverteiler glatte Außenflächen aufweist, in die nur die Aussparungen für die Klemmkörper eingefräst werden müssen. Damit verringert sich der Materialbedarf und der Arbeitsaufwand für die Herstellung der Heißkanalverteiler beträchtlich. Die Klemmkörper werden gesondert in großer Stückzahl kostengünstig gefertigt und in die Aussparungen des Heißkanalverteilers eingesetzt.

Wenn in diesem Zusammenhang die "Oberseite" des Heißkanalverteilers erwähnt wurde, so ist hierunter allgemein die den Angußdüsen gegenüberliegende Außenseite des Heißkanalverteilers zu verstehen.

Vorteilhafte Ausgestaltungen der Erfindung sind Gegenstand von Unteransprüchen.

Die Erfindung wird nachfolgend an einem Ausführungsbeispiel erläutert, das in der Zeichnung dargestellt ist. Es zeigt:

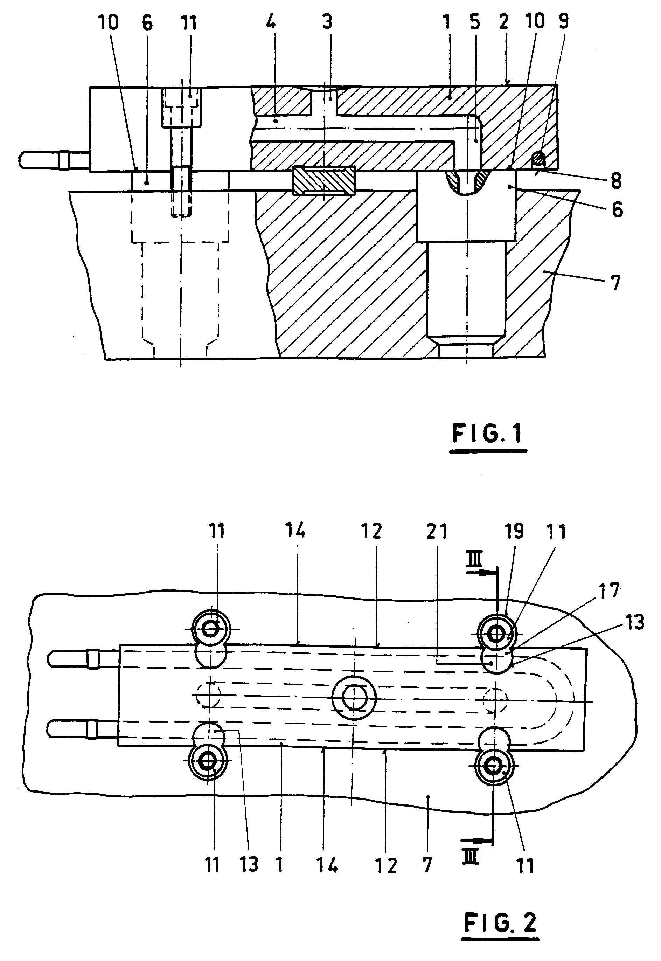

Fig. 1 einen Teilschnitt durch einen Heißkanalverteiler, an den zwei Angußdüsen in einer Düsenplatte eines Spritzgießwerkzeugs angeschlossen sind,
Fig. 2 eine Draufsicht auf den Heißkanalverteiler nach Fig. 1,
Fig. 3 einen Schnitt längs der Linie III-III in Fig. 2 und
Fig. 4 eine vergrößerte Draufsicht auf einen Klemmkörper am Heißkanalverteiler.

Der in der Zeichnung dargestellte Heißkanalverteiler 1 ist im wesentlichen quaderförmig und länglich. Er weist an seiner Oberseite 2 einen Einlaßkanal 3 auf, an den ein (nicht dargestelltes) Mundstück der Plastifiziereinheit angeschlossen wird, um die zu verarbeitende Kunststoffschmelze zuzuführen.

Ein sich entlang dem Heißkanalverteiler 1 erstreckender Verteilerkanal 4 führt zu zwei Auslaßkanälen 5, an die jeweils eine Angußdüse 6 angeschlossen ist. Die beiden Angußdüsen 6 sind in einer Düsenplatte eines Spritzgießwerkzeugs aufgenommen.

In eine Nut an der Unterseite 8 des Heißkanalverteilers 1 ist ein U-förmig gebogener Heizstab 9 eingelegt, der zur Beheizung des Heißkanalverteilers 1 dient. Die glatte Unterseite 8 des Heißkanalverteilers 1 und die ihr zugewandte obere Stirnfläche 10 der Angußdüsen 6 bilden Dichtflächen, an denen es infolge der Wärmedehnung des Heißkanalverteilers 1 zu einer Relativverschiebung kommt.

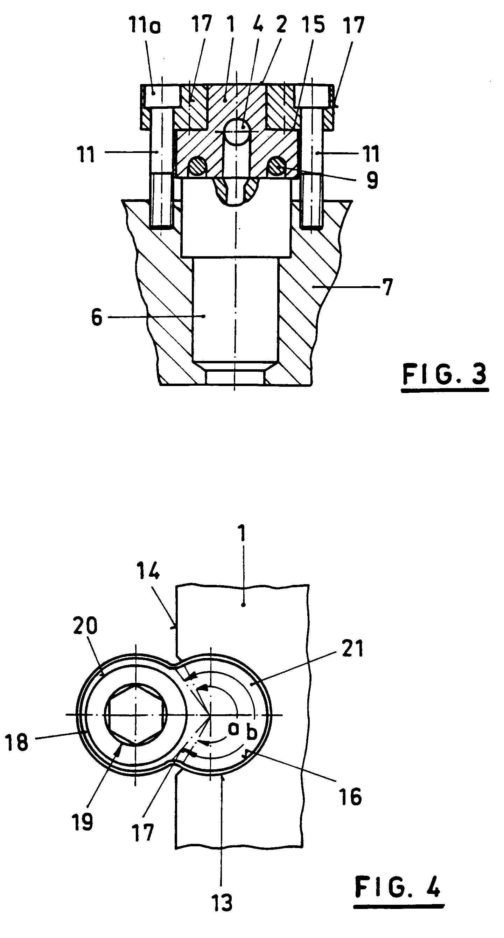

Der Heißkanalverteiler 1 ist mittels seitlicher Klemmschrauben 11 an der Düsenplatte 7 befestigt. Beiderseits jeder Angußdüse 6 bzw. der zugeordneten Kanäle 5 sind an den beiden gegenüberliegenden Längskanten 12 des Heißkanalverteilers 1 Aussparungen 13 vorgesehen, die zur Oberseite 2 und zur dieser Oberseite 2 jeweils benachbarten Seitenfläche 14 hin geöffnet sind. Die Aussparungen 13 werden jeweils von einer zur Ebene der Düsenplatte 7 parallelen Bodenfläche 15 (Fig. 3) und einer senkrecht dazu verlaufenden Zylinderwandfläche 16 begrenzt. Die Achse der Zylinderwandfläche 16 verläuft parallel und im Abstand zur Achse der zugeordneten Klemmschraube 11, d.h. senkrecht zur Ebene der Düsenplatte 7.

In die Aussparung 13 ist ein Klemmkörper 17 eingesetzt. Der Klemmkörper 17 bildet mit einem Abschnitt 18 ein Auge, das eine Aufnahmebohrung 19 für die Klemmschraube 11 und eine Senkbohrung 20 für den Kopf 11a der Klemmschraube 11 aufweist. Seitlich von diesem Abschnitt 18 des Klemmkörpers 17 ist ein Zylinderansatz 21 einstückig angeordnet, der so in die Ausnehmung 13 paßt, daß der Klemmkörper 17 eine begrenzte horizontale Schwenkung in Längsrichtung des Heißkanalverteilers ausführen kann.

Bei dem dargestellten Ausführungsbeispiel ist der Kopf 11a der Klemmschraube 11 vollständig im Klemmkörper 17 versenkt. Der die Aufnahmebohrung 20 für die Klemmschraube 11 enthaltende Abschnitt 18 des Klemmkörpers 17 ist ein Zylinderabschnitt von gleicher Höhe wie der Zylinderansatz 21. Dadurch ragen weder der Klemmkörper 17 noch der Kopf 21 der Klemmschraube 11 über die Oberseite 2 des Heißkanalverteilers 1 hinaus.

Da der Zylinderumfangswinkel a der Aussparung 13 größer als 180° ist und vorzugsweise etwa zwischen 220° und 300° liegt, wird der Zylinderansatz 21 des Klemmkörpers 17 in der Aussparung 13 gehalten und kann nicht seitlich austreten.

Der Zylinderumfangswinkel b (Fig. 4) des Zylinderansatzes 21 ist um mindestens etwa 10° größer als der Zylinderumfangswinkel a der Zylinderwandfläche 16 der Aussparung 13 und ermöglicht somit die horizontale Schwenkung des Klemmkörpers 17 relativ zu dem Heißkanalverteiler 1. Wenn der Heißkanalverteiler 1 infolge von Temperaturänderungen einer Wärmedehnung unterliegt, wird der Klemmkörper 17 um die Klemmschraube 11 geschwenkt, ohne diese jedoch zu verbiegen.

Die Höhe des Zylinderansatzes 21 des Klemmkörpers 17 ist mindestens angenähert gleich der Tiefe der Aussparung 13. Vorzugsweise ist auch der die Aufnahmebohrung 19 für die Klemmschraube 11 enthaltende Abschnitt 18 des Klemmkörpers 17 ein Zylinderabschnitt von gleicher Höhe wie der Zylinderansatz 21, so daß der Klemmkörper 17 von durchgehend gleicher Höhe ist.

## Patentansprüche

1. Klemmeinrichtung für Heißkanalverteiler mit einer Schraubenverbindung zwischen einem Heißkanalverteiler (1) und einer Düsenplatte (7) des Spritzgießwerkzeugs, in die mindestens eine an den Heißkanalverteiler (1) angeschlossene Angußdüse (6) eingesetzt ist, mit beiderseits des Heißkanalverteilers (1) angeordneten, in die Düsenplatte (7) eingeschraubten Klemmschrauben (11), dadurch gekennzeichnet, daß an den gegenüberliegenden Längskanten (12) des Heißkanalverteilers (1) jeweils zur Oberseite (2) und zur benachbarten Seitenfläche (14) des Heißkanalverteilers (1) offene Aussparungen (13) vorgesehen sind, die von einer zur Ebene der Düsenplatte (7) parallelen Bodenfläche (15) und einer senkrecht dazu verlaufenden Zylinderwandfläche (16) begrenzt werden, und daß jeweils ein Klemmkörper (17) eine Aufnahmebohrung (19) für die Klemmschraube (11) und seitlich davon einen Zylinderansatz (21) aufweist, der in die Aussparung (13) mit begrenzter horizontaler Schwenkbarkeit passend eingesetzt ist.

2. Klemmeinrichtung nach Anspruch 1, dadurch gekennzeichnet, daß der Zylinderumfangswinkel (a) der Zylinderwandfläche (16) der Aussparung (13) größer als 180° ist.

3. Klemmeinrichtung nach Anspruch 2, dadurch gekennzeichnet, daß der Zylinderumfangswinkel (a) der Zylinderwandfläche (16) der Aussparung (13) etwa zwischen 220° und 300° liegt.

4. Klemmeinrichtung nach Anspruch 1, dadurch gekennzeichnet, daß der Zylinderumfangswinkel (b) des Zylinderansatzes (21) um mindestens etwa 10° größer als der Zylinderumfangswinkel (a) der Zylinderwandfläche (16) der Aussparung (13) ist.

5. Klemmeinrichtung nach Anspruch 1, dadurch gekennzeichnet, daß die Höhe des Zylinderansatzes (21) des Klemmkörpers (17) mindestens angenähert gleich der Tiefe der Aussparung (13) ist.

6. Klemmeinrichtung nach Anspruch 1, dadurch gekennzeichnet, daß der die Aufnahmebohrung (19) für die Klemmschraube (11) enthaltende Abschnitt (18) des Klemmkörpers (17) ein Zylinderabschnitt von gleicher Höhe wie der Zylinderansatz (21) ist.

7. Klemmeinrichtung nach Anspruch 1, dadurch gekennzeichnet, daß der Kopf (11a) der Klemmschraube (11) vollständig im Klemmkörper (17) versenkt ist.

8. Klemmeinrichtung nach Anspruch 1, dadurch gekennzeichnet, daß die Klemmkörper (17) jeweils beiderseits einer Anschlußbuchse (6) angeordnet sind.

## Claims

1. Clamping device for hot-channel distributor comprising a screwed connection between a hot-channel distributor (1) and a nozzle plate (7) of the injection molding tool, which accommodates at least one sprue bushing (6) connected to the hot-channel distributor (1), which clamping device comprises clamping screws (11) screwed to the nozzle plate (7) on either side of the hot-channel distributor (1), **characterized** in that recesses (13) are provided at the opposing longitudinal edges (12) of the hot-channel distributor (1), these recesses being open to the upper side and the adjacent lateral surfaces (14) of the hot-channel distributor (1) and being delimited by a bottom area (15), which is parallel to the plane of the nozzle plate (7), and a cylindrical wall surface perpendicular thereto, and that one clamping body (17) each, comprising a location hole (19) for the clamping screw (11) and laterally adjacent thereto a cylindrical lug (21), is snugly fitted into said recess (13) with a limited horizontal slewability.

2. Clamping device according to claim 1, **characterized** in that the cylindrical angle at circumference (a) of the cylindrical wall surface (16) of the recess (13) is larger than 180°.

3. Clamping device according to claim 2, **characterized** in that the cylindrical angle at circumference (a) of the cylindrical wall surface (16) of the recess (13) is approximately between 220° and 300°.

4. Clamping device according to claim 1, **characterized** in that the cylindrical angle at circumference (b) of the cylindrical lug (21) is at least 10° larger than the cylindrical angle at circumference (a) of the cylindrical wall surface (16) of the recess (13).

5. Clamping device according to claim 1, **characterized** in that the height of the cylindrical lug (21) of the clamping body (17) is at least approximately equal to the depth of the recess (13).

6. Clamping device according to claim 1, **characterized** in that the portion (18) of the clamping body (17) which comprises the location hole (19) for the clamping screw (11) has the same height as the cylindrical lug (21).

7. Clamping device according to claim 1, **characterized** in that the head (11a) of the clamping screw (11) is totally sunk in said clamping body (17).

8. Clamping device according to claim 1, **characterized** in that clamping bodies (17) are provided on either side of a sprue bushing (6).

## Revendications

1. Dispositif de blocage pour répartiteur à canal chauffant comportant un vissage entre un répartiteur (1) à canal chauffant et une paque de buse (7) de l'outil de moulage par injection dans lequel est insérée au moins une buse (6) d'entrée raccordée au répartiteur (1) à canal chauffant, comportant de part et d'autre du répartiteur (1) à canal chauffant des vis de blocage (11) vissées dans la plaque de buse (7), caractérisé en ce que les bords (12) longitudinaux opposés du répartiteur (1) à canal chauffant sont munis chacun d'évidements (13) qui sont ouverts en direction du côté (2) supérieur et des surfaces (14) latérales voisines du répartiteur (1) à canal chauffant et qui sont délimités par une surface (15) de fond parallèle au plan de la plaque de buse (7) et par une surface (16) de paroi cylindrique qui est perpendiculaire à la surface de fond, et en ce que chacune des pièces (17) de blocage comporte un trou (19) de réception pour la vis (11) de blocage et, latéralement à cela, un embout (21) cylindrique qui est introduit dans l'évidement (13) en s'y adaptant avec une capacité limitée de basculement horizontal.

2. Dispositif de blocage suivant la revendication 1, caractérisé en ce que l'angle (a) périphérique du cylindre de la surface (16) cylindrique de paroi de l'évidement (13) est supérieur à 180°.

3. Dispositif de blocage suivant la revendication 2, caractérisé en ce que l'angle (a) périphérique du cylindre de la surface (16) cylindrique de paroi de l'évidement (13) est compris entre 220° et 300° environ.

4. Dispositif de blocage suivant la revendication 1, caractérisé en ce que l'angle (b) périphérique du cylindre de l'embout (21) cylindrique est supérieur d'au moins 10° environ à l'angle (a) périphérique du cylindre de la surface de paroi cylindrique de l'évidement 13.

5. Dispositif de blocage suivant la revendication 1, caractérisé en ce que la hauteur de l'embout (21) cylindrique de la pièce (17) de blocage est au moins approximativement égale à la profondeur de l'évidement (13).

6. Dispositif de blocage suivant la revendication 1, caractérisé en ce que la partie (18) de la pièce (17) de blocage, qui contient le trou (19) de réception de la vis (11) de blocage, est une partie cylindrique de même hauteur que l'embout 21 cylindrique.

7. Dispositif de blocage suivant la revendication 1, caractérisé en ce que la tête (11a) de la vis (11) de blocage est totalement noyée dans la pièce (17) de blocage.

8. Dispositif de blocage suivant la revendication 1, caractérisé en ce que les pièces (17) de blocage sont prévues de part et d'autre d'une douille (6) de raccordement.
